# EUROPEAN PATENT APPLICATION

(11) **EP 4 667 212 A1**
(43) Date of publication of application: **24.12.2025**
(21) Application number: 24315304.6
(22) Date of filing: 21.06.2024
(51) Int. Cl.: B32B 3/16, B32B 5/26, B32B 7/10, B32B 7/12, B32B 27/08, B32B 27/12, B32B 27/16, B32B 27/26, B32B 27/28, B32B 27/30, B32B 27/36, B32B 27/38

(54) **METHOD FOR MANUFACTURING LAMINATED FIBER REINFORCED THERMOSETTING POLYMER COMPOSITES WITH TOUGHENING INTERLEAVE MADE FROM VERTICALLY ALIGNED CARBON NANOTUBES**

(71) Applicant: Kouros Lab, 13790 Rousset (FR)
(72) Inventor: Goislard De Montsabert, Thomas, 83470 Saint Maximin la Sainte Baume (FR); Boisset, Aurélien, 13120 Gardanne (FR); Karakashov, Blagoj, 13100 Aix-en-Provence (FR)
(74) Representative: IXAS Conseil

(57) **Abstract**

Method for manufacturing a composite article comprising a plurality of plies, wherein a ply comprising an array of vertically aligned carbon nanotubes, abridged VACNT, deposited onto a polymer film is deposited onto a ply of fibers which are possibly preimpregnated with a thermosetting resin.

## Description

### Technical field of the invention

The invention relates to the field of materials science, and more precisely to the field of composite materials comprising fibers embedded in a polymer matrix. The invention relates to composite materials comprising a thermosetting matrix embedding synthetic or natural fibers. These composite materials can be manufactured as a laminated stack of plies.

More precisely, the present invention relates to laminated composite materials comprising stacked plies of a composite material comprising fibers embedded in a thermosetting polymer matrix and vertically aligned carbon nanotubes (abridged VACNT) arrays at the interface between two adjacent plies. In these laminated composite materials, the interface between two facing surfaces of plies is reinforced by VACNT arrays.

The invention is directed to a new method for manufacturing such composite materials, in which said VACNT array is provided on a thermoplastic polymer film and in which said VACNT array on its polymer film is then laminated onto the ply of the composite material. The use of a thermoplastic polymer film as a support for VACNT arrays simplifies the handling of the VACNT arrays in the workshop where said composite materials are manufactured.

### State of the art

Laminated composites (also called fiber reinforced polymer composites) are a well-known class of materials consisting of fibers embedded in a polymer matrix. The fibers can be of defined length and randomly oriented, or they can be continuous and regularly organized, either in a uni-directional fashion (UD) or in a woven structure. A great variety of synthetic materials are used as fibers, for instance carbon fibers, glass fibers, Kevlar^{™} fibers, ceramic fibers like boron nitride fibers or silicon carbide fibers. Natural fibers can be used, too, such as linen fibers. The matrix material, or resin, or resin matrix, can be made of a polymeric material.

The lamination process consists in laying up, stacking and compressing several layers (so-called plies) of fibers, said layers being impregnated with the matrix material. The layers can be stacked as dry (non impregnated) fiber plies, which are then impregnated with the polymeric material representing the resin matrix; this is called a post impregnation process. Post impregnation can be carried out by various impregnation techniques such as Resin Transfer Molding (abridged RTM). Alternatively, a pre impregnation process can be used, in which the layers are provided and stacked as pre impregnated plies (so-called prepreg ply).

There are two main types of polymer matrices that can be used in laminated composites: the thermosetting type and the thermoplastic type. Post-impregnation and pre-impregnation both require a polymer that presents a certain fluidity. Thermosetting matrices are usually viscous and unstable at room temperature and are prompt to solidify upon a temperature increase. This solidification process is irreversible. Thermoplastic matrices are solid at room temperature and can be melted at temperatures above their melting point. This process is reversible, and they will solidify again when cooled down below their melting point.

Both thermosetting and thermoplastic matrices can be used to manufacture laminated fiber-reinforced polymer composites. Depending on the type of matrix the process to manufacture a laminated composite part is different. In any case, for both thermosetting and thermoplastic matrices, once the stack of plies is completed with the matrix (pre-infiltrated or post-infiltrated) surrounding the fibers, a typical manufacturing process comprises a step in which this intermediate composite part is submitted to a compressive force (or to an isostatic pressure), and possibly also to a temperature increase for a certain period of time. During this process the composite material is consolidated, leading to an intimate contact between facing interfaces. When VACNT are inserted at the interface between two adjacent (facing) plies, this will usually lead also to a certain degree of interpenetration of VACNT and polymers. For thermosetting matrices, this consolidation step may also lead to the curing of the thermosetting polymer, or curing may be carried out (or may be completed) by a subsequent curing step (see Fisher et al., "The influence of key processing parameters on thermoset laminate curing", Composites Communications 42 (2023), 101686). By this process, a rigid, shaped composite part is obtained.

Thermosetting matrices, and in particular epoxy-based matrices, are the most prominently ones that are used in the industry in structural parts; this is due to their excellent processability, mechanical and thermal stability. Other thermosetting matrices that are used include phenolic, polyurethane, polybenzoxazine, polyester, polyimide, cyanate or bismaleimide polymer resins. Certain thermosetting matrices do not need to experience a temperature increase above room temperature to solidify: they would harden at room temperature.

When subject to mechanical stress, structural laminated composite parts may fail through a failure mechanism involving the nucleation of fracture (or cracks) inside the part and their growth and propagation along the interface between plies. This interply area is typically rich in resin and poor in fiber, which makes it a weak area where the cracks can propagate and grow more easily than in the fiber rich intra ply area. The interply area is typically a few microns thick. Its thickness depends on the details of the process used for the consolidation, the lay up (orientation of fibers in the plies and from ply to ply) as well as the diameter of the fibers. For fibers of diameter 10 µm and for layup involving different orientation of fibers from ply to ply, this thickness is usually not less than twice the diameter of a fiber, i.e., typically 20 µm. Mechanically reinforcing this weak interply area is thus a way to reinforce (or strengthen or toughen) the laminated composite parts and is of primary industrial interest for the widely used thermosetting epoxy-based composites.

Several strategies are known to toughen the interply area of laminated composites. In particular, these strategies include introducing stable thermoplastic particles, polymer fiber veils, graphene flakes or carbon nanotubes in the interply region.

One promising way is to introduce vertically aligned carbon nanotubes (abridged VACNT) in this region, such that these nanotubes connect the fibers from one ply to those from the adjacent ply, thus avoiding the presence of too large resin rich volume in this region. The VACNT act as a barrier to the propagation of the cracks along this interply region, thus making the composite part more difficult to break by delamination failure mechanism. This approach has often been referred to as NanoStitch or NawaStitch^{™}, the latter being a trademark used by Nawa Technologies.

The usual way to introduce VACNT in the interply region is to transfer them from their original growth (or synthesis) substrate (typically silicon, quartz, glass, or metal; advantageously flexible metal foils like stainless steel foil) to the surface of a fiber ply that has been pre-impregnated with a thermosetting resin. With this typical process, the tack of the resin at the surface of the prepreg is used to stick a VACNT array with an adhesion force superior to its adhesion force on the original growth substrate. In other word, the VACNT array layer, provided on its original growth substrate, is laminated onto the prepreg layer, and in a subsequent step, the original growth substrate is peeled off, while the VACNT layer remains on the prepreg substrate.

This prior art process is further described in WO 2007/136755 (assigned to Massachusetts Institute of Technology) and in EP 3 102 404 B1 (assigned to NAWA America, Inc.). The subsequent steps of the process to manufacture composite panels or composite parts are unchanged compared to a conventional process without VACNT. This process has proven to bring value to many composite systems (see for instance : Garcia et al., "Joining prepreg composite interfaces with aligned carbon nanotubes", Composites: Part A 39 (2008) 1065-1070; Ni et al., "Static and fatigue interlaminar shear reinforcement in aligned carbon nanotube-reinforced hierarchical advanced composites", Composites Part A 120 (2019) 106-115) to improve their mechanical properties, but also to allow for new technical features through the change of their thermal and / or electrical properties (see for instance : Natarajan et al. "Aligned carbon nanotube morphogenesis predicts physical properties of their polymer nanocomposites », Nanoscale, 2019, 11, 16327).

However, this state-of-the-art process suffers from a difficulty in relation with the availability of the VACNT material at the composite part manufacturing site. When the vapor-phase deposition of the VACNT on their original substrate (which is usually stainless steel) and the manufacture of the composite part are done at different locations, either the prepreg material has to be transported from the prepreg manufacturing site to the VACNT manufacturing site for transferring the VACNT onto the prepreg, and then to the composite manufacturing site, or the VACNT array has to be transported on its original stainless steel substrate to the composite manufacturing site. Both options are undesirable due to the shipping cost. Most thermosetting prepregs require to be stored at low temperature (typically -18°C) to preserve their shelf life; this significantly increases the shipping cost. Carbon nanotubes require specific safety precautions during packing, shipping, and unpacking, and their safe handling and use at the composite manufacture site requires specific know-how and dedicated equipment; moreover, the original growth substrate (usually stainless steel) is quite heavy. In particular, the transfer of VACNT arrays from their original substrate onto the prepreg requires specific equipment and a lot of know-how.

It would therefore be desirable to use a versatile, safe and efficient alternative method to introduce the VACNT in the interply region of epoxy based laminated composite. This would foster the acceptance and use of VACNT interlayers by composite manufacturers who wish to improve the properties of their composite materials and parts.

The present invention proposes a new method to achieve this goal.

### Objects of the invention

According to the invention, the problem is solved by providing the VACNT array on a polymer film and laminating said polymer film carrying the VACNT array onto the impregnated fiber ply. Said polymer film should be thin, preferably as thin as possible. Said polymer film can be supported on a supporting film which will be removed at a later stage of the process.

A first object of the present invention is a method for manufacturing a composite article comprising a plurality of plies, wherein a ply comprising an array of vertically aligned carbon nanotubes deposited onto a polymer film is deposited onto a ply of fibers which are possibly preimpregnated with a thermosetting resin. In a specific embodiment, said ply of fibers is a ply of woven fibers.

In an advantageous embodiment, said method comprises:
providing at least a first ply of a first type, called here "frist composite ply", having a first surface and a second surface, said first composite ply including a first plurality of fibers disposed therein, and said first composite ply possibly being infiltrated with a thermosetting polymer,
providing at least a ply of a second type, called here "VACNT ply", comprising an array of vertically aligned carbon nanotubes, abridged VACNT, deposited onto a polymer film, said VACNT ply having a first surface formed by said VACNT array, and a second surface formed by said polymer film,
providing at least a second ply of a first type, called here "second composite ply", having a first surface and a second surface, said second composite ply including a second plurality of fibers disposed therein, and said second composite ply possibly being infiltrated with a thermosetting polymer, and said second composite ply being identical to or different from said first composite ply,
contacting said first surface of said first composite ply with said first or second surface of said VACNT ply,
contacting said first surface of said second composite ply with said second or first surface of said VACNT ply, to form a stack of plies,
possibly repeating, once or more, the stacking of alternate composite plies including fibers disposed therein and VACNT plies comprising a VACNT array deposited onto a polymer film,
optionally infiltrating said stack of plies with a fluid thermosetting resin,
exerting pressure onto said composite article such that said composite plies and said VACNT plies are joined to form a composite article.

In further advantageous embodiments, which can be combined with the previous one and/or with each other:
- Said polymer film is a thermoplastic film.
- Said step of exerting pressure is carried out at elevated temperature.
- Said step of exerting pressure is carried out at a temperature corresponding to at least the melting temperature of said thermoplastic polymer.
- Said impregnated fiber ply has been impregnated with a thermosetting polymer.
- Said thermoplastic polymer and said thermosetting polymer are selected such that they are miscible. This ensures that the thermoplastic film will dissolve in the matrix upon curing and compressing, and will not have detrimental effects due to internal interfaces within the polymer matrix.
- Said thermosetting polymer is an epoxy-based polymer.
- Said thermoplastic polymer is selected from the group consisting of: poly(caprolactone), poly(carbonate), poly(sulfone), poly(3-hydroxyvalerate), poly(etherimide), poly(methyl methacrylate), poly(ethylene oxide), poly(ethersulfone), poly(lactic acid), poly(ethylene-co-methacrylic acid), poly(ethylene-co-methyl acrylate), poly(ethylene-co-glycidyl methacrylate).
- Said polymer film has a thickness of less than 40 µm, preferably less than 30 µm, still more preferably less than 25 µm, still more preferably less than 20 µm, and most preferably less than 15 µm.
- Said thermosetting polymer is cured at a temperature above the melting temperature of said thermoplastic polymer.

According to the invention, said polymer film is a transport medium which will remain in the composite part. As a consequence, it must not have any detrimental effects; it may have positive effects.

Another object of the present invention is a composite part, capable of being manufactured by the method according to the invention. Yet another object of the present invention is the use of a ply comprising an array of vertically aligned carbon nanotubes deposited onto a polymer film, which is preferably a thermoplastic film, said ply being called here "VACNT ply", for the manufacture of a composite part comprising a fiber ply of a first type in contact with each face of said VACNT ply, said fiber plies of a first type being impregnated with a thermosetting resin.

### Brief description of the figures

Figures 1 to 32 illustrate various features of advantageous embodiments of the invention. They are not intended to limit the scope of the invention. These figures refer to four composite plates discussed below.
Figure 1, broken down into Figure 1-1 to 1-5, is a schematic diagram of manufacturing methods in relation with the present invention.
Figures 2 to 4, 8 to 9, 13 to 14, 18 to 24 and 27 to 30 are micrographs obtained by scanning electron microscopy.
Figures 5 to 7, 10 to 12, 15 to 17 and 25 to 26 are optical micrographs,

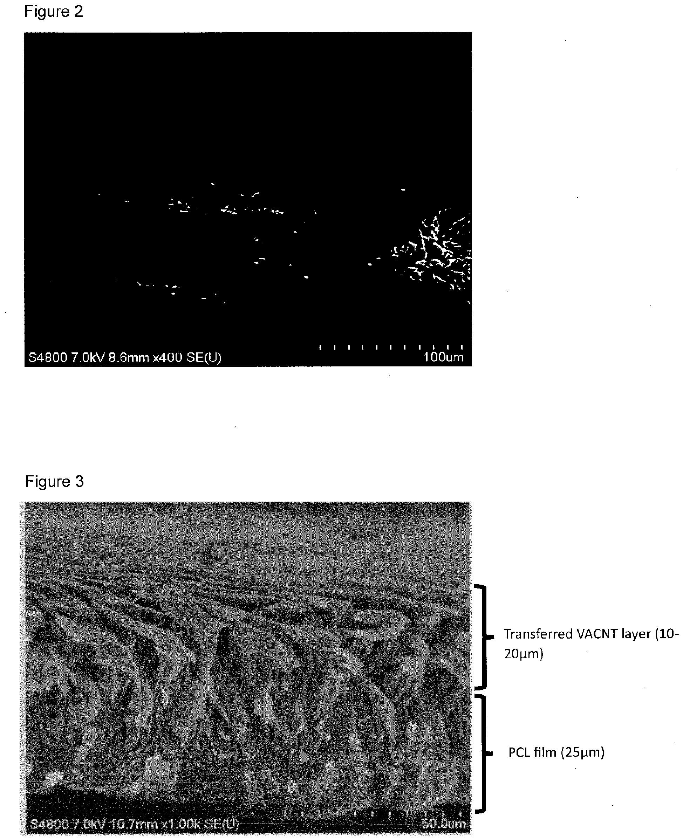

Figures 2 to 4 refer to Example 1 and show a VACNT array transferred on a poly(caprolactone) film.

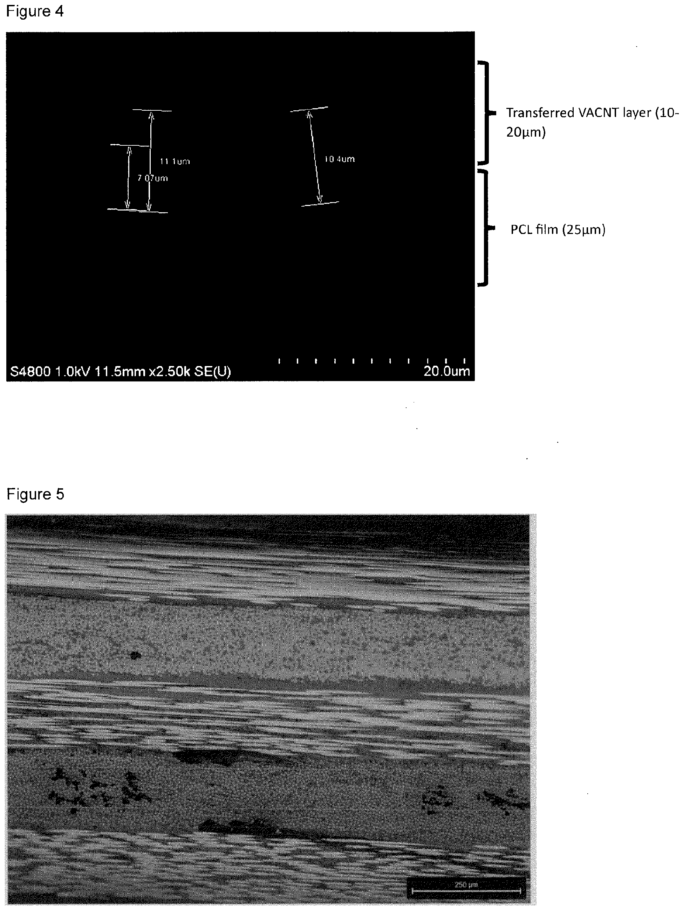

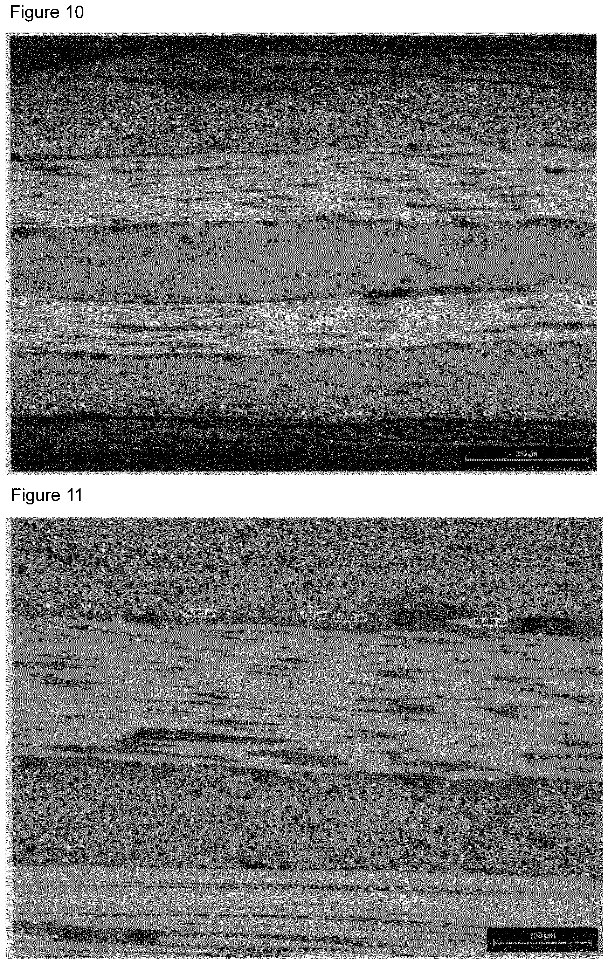

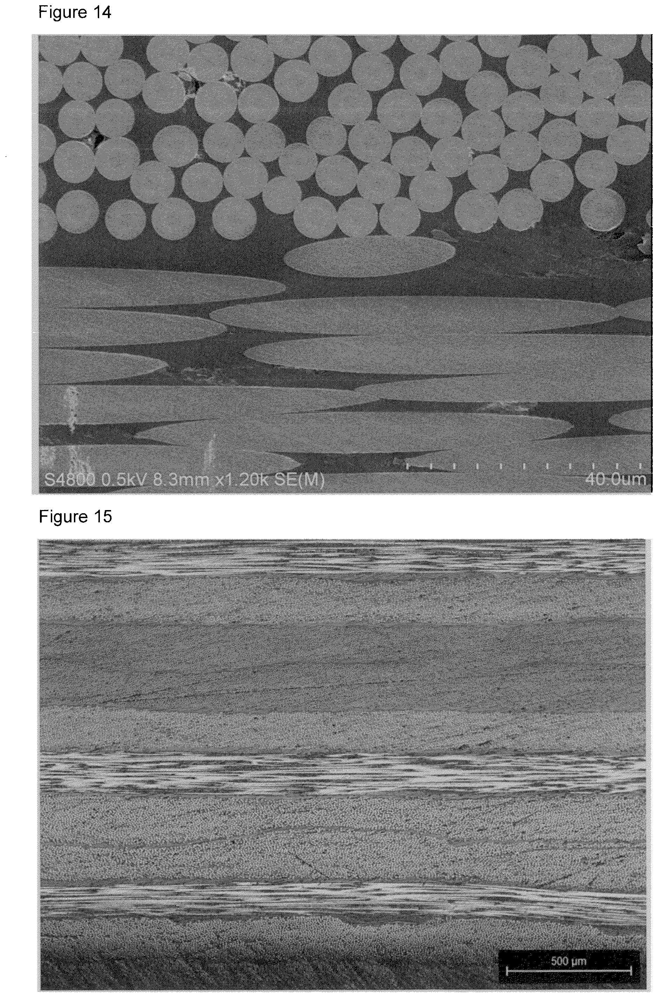

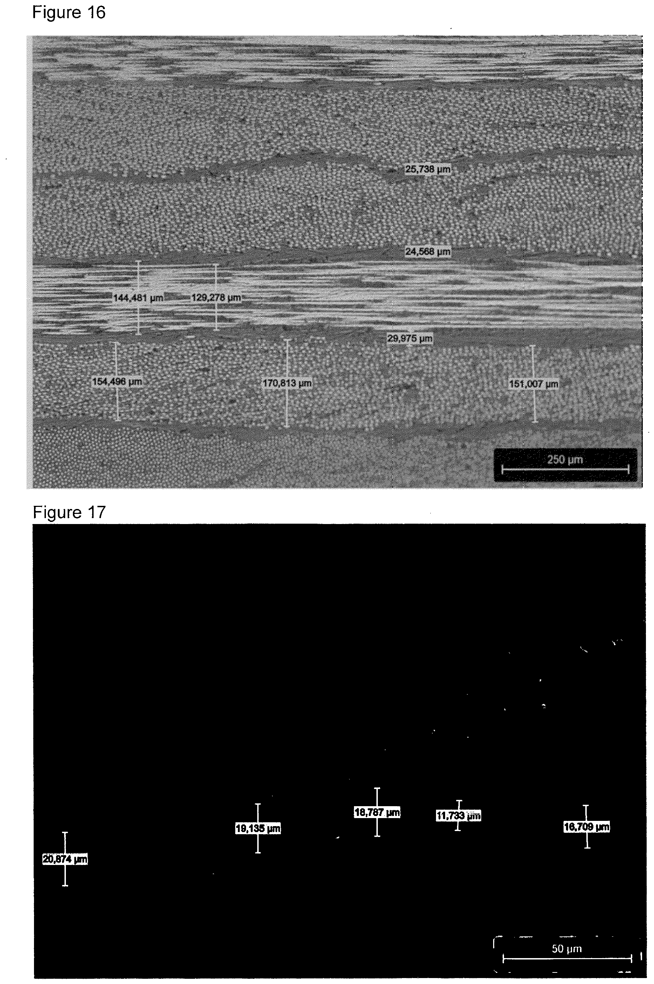

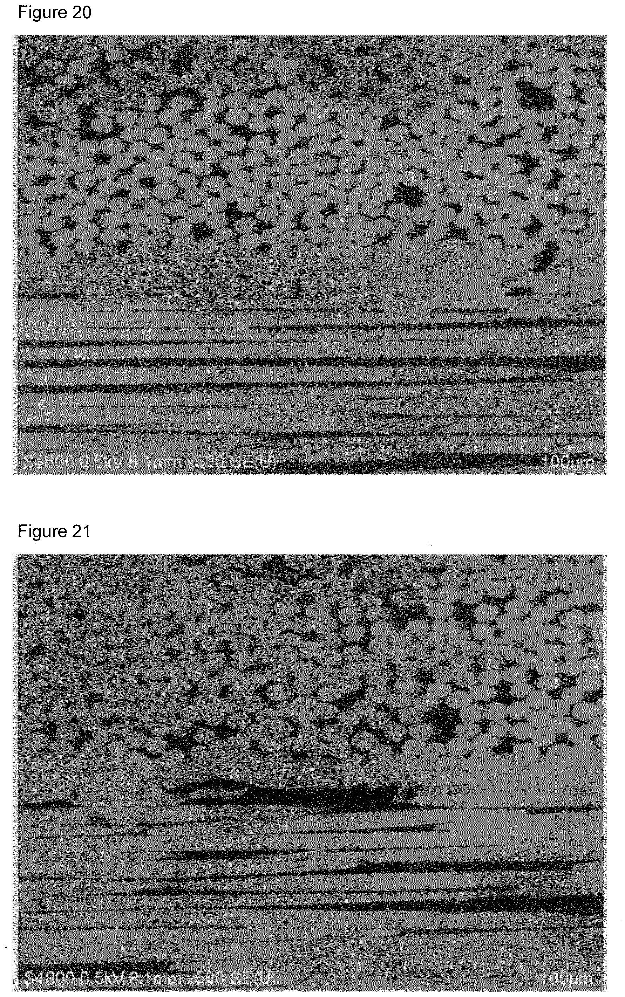

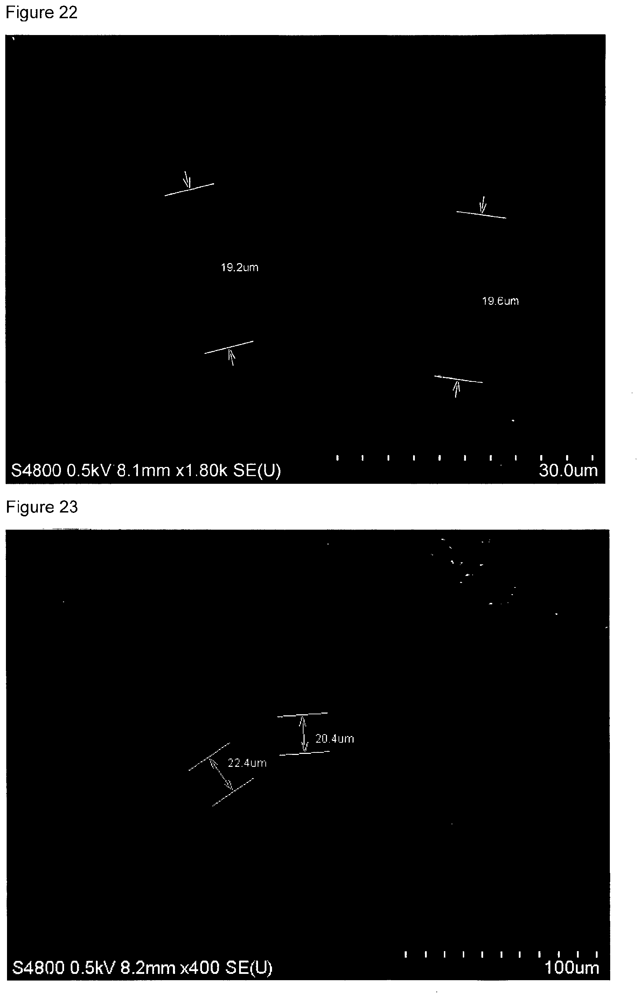

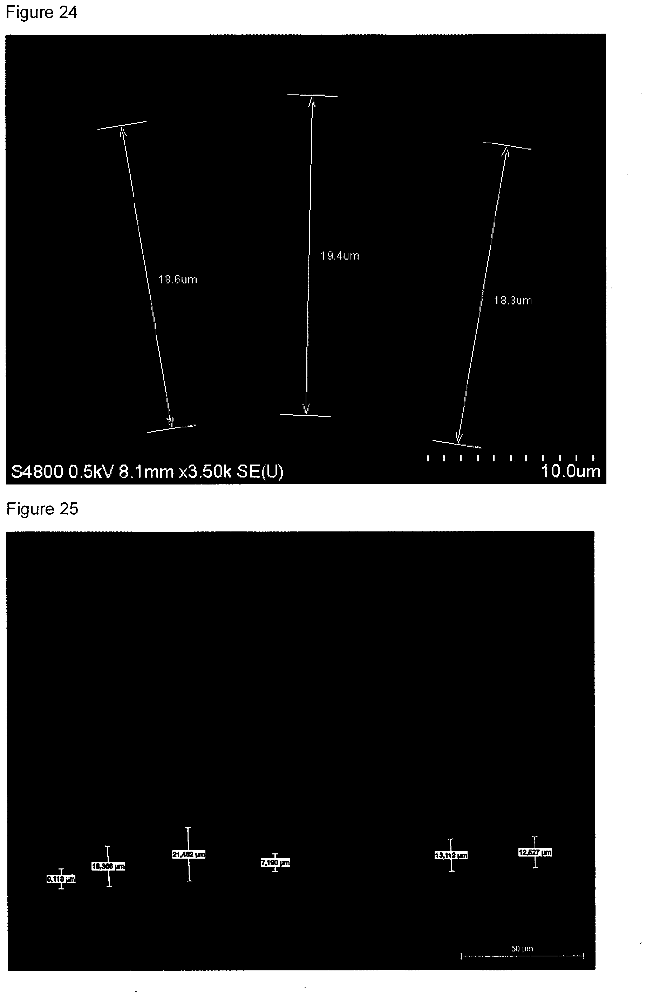

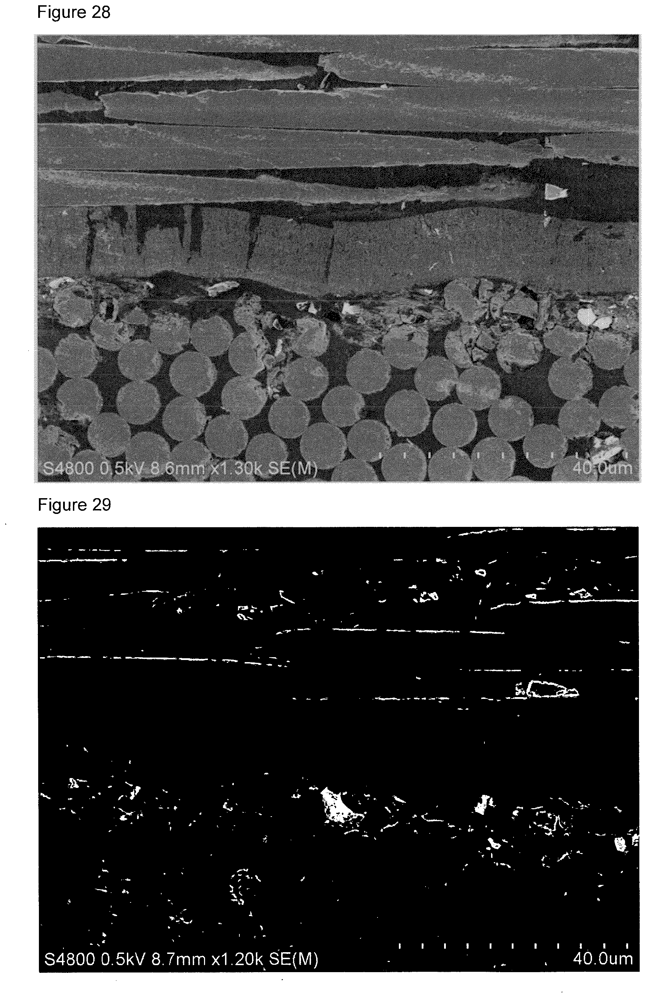

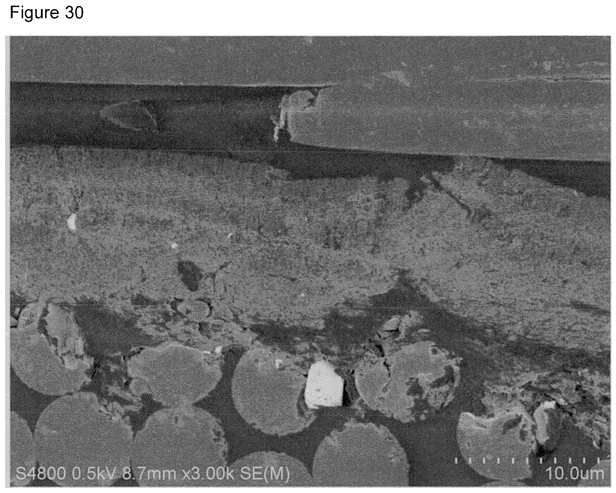

Figures 5 to 9 refer to Example 2 ("Plate 1"), figures 10 to 14 refer to Example 3 ("Plate 2), figures 15 to 24 refer to Example 4 ("Plate 3"), figures 25 to 30 refer to Example 4 ("Plate 4").

### Detailed description of the invention

According to an essential feature of the method according to the invention, the VACNT array is provided on a polymer film. This polymer film is used as a support for the VACNT, allowing safe shipping and handling. Said polymer film is advantageously a thermoplastic film. Due to the strong adhesion on said polymer film (promoted by partial embedding of the VACNT in said film during their transfer from the growth substrate to the polymer film by calendering or softening / melting and capillarity-driven migration of the thermoplastic polymer) the VACNT will not get accidentally removed from the substrate.

The complex formed by the VACNT array on its film is then placed on the preimpregnated ply. The polymer material of the VANCT bearing film and the polymer of the thermosetting composite matrix must be selected such as to be compatible. Such compatibility is preferably a miscibility.

Thermoplastic polymers and thermosetting polymers are often non compatible to bind to each other and/or to form a homogeneous solid compound. However, a few exceptions are known in which thermoplastic and thermosetting polymers are compatible. Some thermoplastic polymers are non-miscible in thermosetting epoxy polymers and would form a well-defined but strong interface when mixed together in any proportions. Some other thermoplastic polymers present a certain degree of solubility in thermosetting epoxy polymers and would dilute in each other when mixed together in certain proportions: they are thus miscible in epoxy polymers.

According to the invention, this composite formed by VACNT deposited onto a polymer film is used by the composite manufacturer as an interleave that is intercalated in between two fiber plies. This can be done without using specific tools or specific safety precautions which would be necessary when handling loose carbon nanotubes. Said fiber plies can advantageously be prepreg plies, that is to say, they have been impregnated with a resin that is sufficiently fluid for impregnation. Impregnation of fiber plies occurs via diffusion of the fluid resin within the dry fiber ply, parallel to the plane of said ply. Post impregnation of said fiber plies can also be used, such as in the RTM process. Preimpregnation and postimpregnation both lead eventually to a composite material in the form of plies, comprising fibers embedded into a polymer matrix. Preimpregnation and postimpregnation of fiber plies by thermosetting polymers are known processes.

Typically, the thickness of said composite plies is comprised between about 100 µm and about 400 µm, preferably between about 100 µm and about 300 µm, more preferably between about 150 µm and about 250 µm, and still more preferably between about 150 µm and about 200 µm.

According to an advantageous feature of the invention, said polymer material of the polymer film bearing the VACNT is miscible with said thermosetting polymer. This will be described here in detail, in relation with a thermoplastic film.

Due to the miscibility of the thermoplastic film with the thermosetting polymer, the thermoplastic polymer film will dissolve in the uncured thermosetting polymer matrix, forming a blend interface (the term "blend interphase" would be more precise here than "blend interface") characterized by a concentration gradient of the thermoplastic polymer in the uncured thermosetting matrix. In an advantageous embodiment, the thermoplastic film will thus disappear as such, and no discontinuous interface is visible after heat treatment; unlike a blend interphase, such a discontinuous interface could form a weak zone in the composite material. Moreover, it allows the carbon nanotubes to bridge the fibers of the adjacent plies effectively without being prevented to do so by the presence of the thermoplastic film.

The absence of an interface between the polymer film and the thermosetting polymer can be shown by scanning electron microscopy techniques known to a person skilled in the art. The formation of a polymer blend in the interphase region can be shown by FTIR spectroscopy, the formation of polymer blends usually proceeds via hydrogen bonds which will modify the vibration frequency of the covalent bond of the atoms involved in said hydrogen bonds.

In addition to its miscibility in the thermosetting matrix, the thermoplastic material used for the film should be chosen so that the VACNT transfer is achievable through a controlled process.

The thermosetting polymer may contain an appropriate hardener and/or an appropriate catalyst. Typically, said thermosetting polymer is an epoxy polymer.

In a first embodiment of this transfer process, a controlled softening is achieved by a temperature increase which is sufficient to allow for the viscous (partially melted) thermoplastic polymer to migrate (or flow) between the carbon nanotubes of the VACNT network through capillarity forces and moderate applied pressure, but not too high to avoid an excessive fluidity of the thermoplastic polymer: said thermoplastic polymer should have sufficient mechanical consistence during the process so that the film remains continuous and uniform in thickness after the transfer process.

In a second embodiment of this transfer process, the thermoplastic film is not heated but remains at room temperature. This process involves strong compression of the VACNT layer on the thermoplastic polymer film, sufficient to achieve mechanical anchoring of the VACNT in the thermoplastic polymer. This second embodiment has drawbacks related to possible buckling of the nanotubes under high compression stress; it is less preferred than the first embodiment.

In both embodiments, said thermoplastic polymer film should be as thin as possible, so that the thermoplastic film can dissolve completely in the uncured epoxy matrix, and so that after dissolution in the epoxy matrix, the thermoplastic material does not modify significantly the properties and features of the (hybrid) matrix, and so that the extra weight of this additional material remains insignificant or at least acceptable for the final composite part.

Alternatively, if the thermoplastic polymer material chosen for the film presents some intrinsic added value to the epoxy matrix when dissolved into it, its thickness may be chosen to achieve a targeted concentration for which it is advantageous when mixed with the epoxy matrix. In the framework of the present invention, poly(caprolactone), abridged here as PCL, is a particularly advantageous thermoplastic material that can be used as a support film for VACNT.

The temperature at which the thermoplastic polymer films contacts the uncured thermosetting polymer matrix can influence the miscibility of the two polymers. More generally, the concentration of thermoplastic polymer in the blend interface with the uncured thermosetting polymer will depend on the film thickness, on the temperature at which they are contacted, and on the time during which this temperature is applied. As an example, if epoxy resins are used as a thermosetting polymer, and PCL is used as a thermoplastic film, the PCL concentration in the blend interface can be chosen below about 7 wt.-%, and preferably below about 6 wt.-%, and more preferably below about 5 wt.-% to achieve a certain level of hardening and toughening, or can be chosen above about 10 wt.-% to achieve phase separation and matrix toughening.

To mitigate the extra weight introduced by the thermoplastic polymer film and/or to target a certain concentration of the thermoplastic polymer material in the epoxy matrix, a specific adjustment of the epoxy resin content in the composite system can also be made.

Curing of the thermosetting polymer is carried out advantageously after having assembled the different layers forming the composite part. Curing can be carried out during compression of the composite part, or in a separate step after compression. Said curing step should be carried out at a temperature of at least the melting temperature of the thermoplastic film, which fosters the dissolution of the thermoplastic polymer in the thermosetting polymer matrix. It also decreases the risk of phase separation. The possibility to carry out the curing step at a given temperature (such as at a temperature above the melting temperature of the thermoplastic film) depends also on the choice of the hardener.

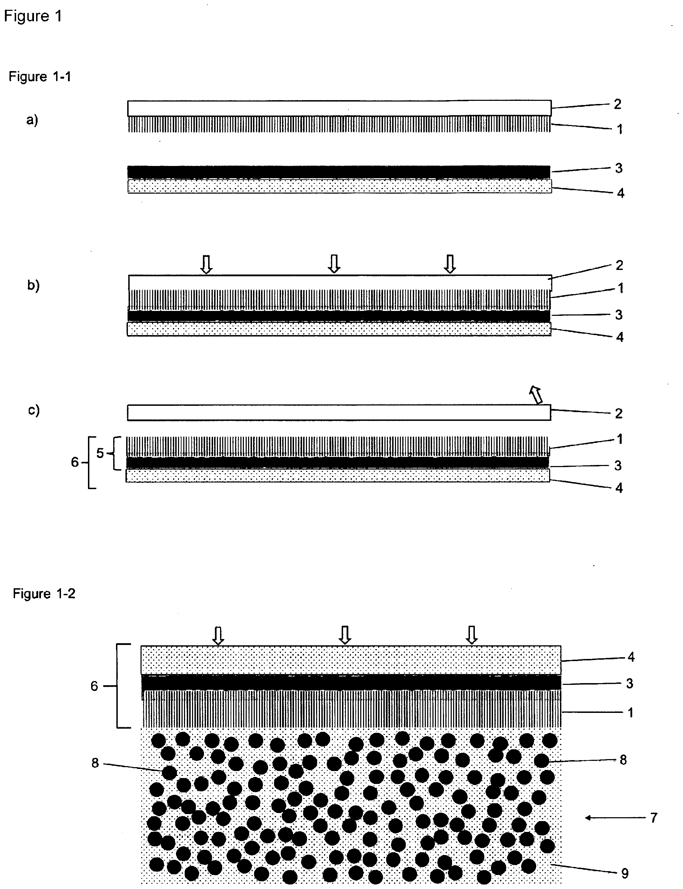

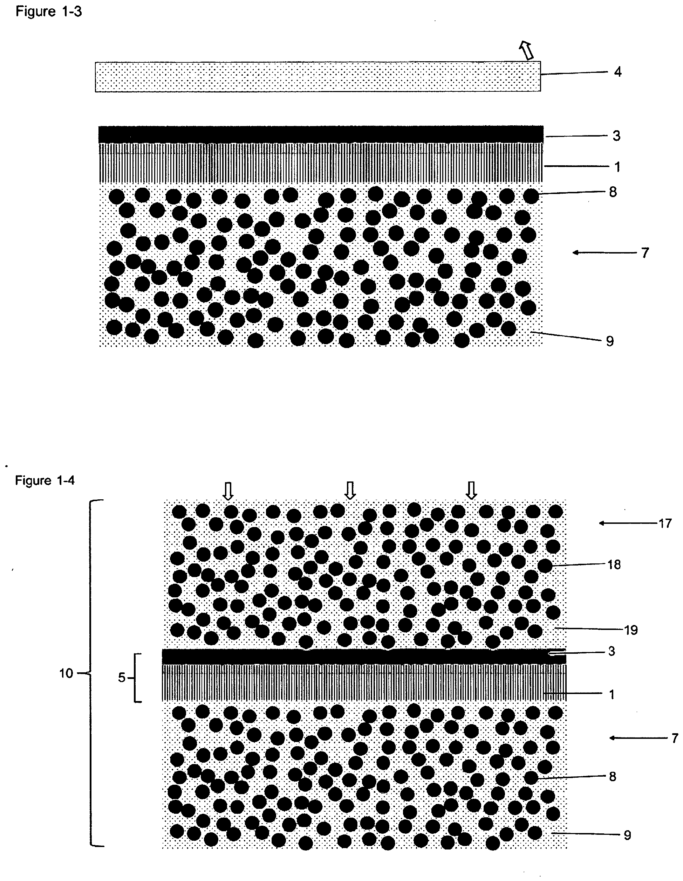

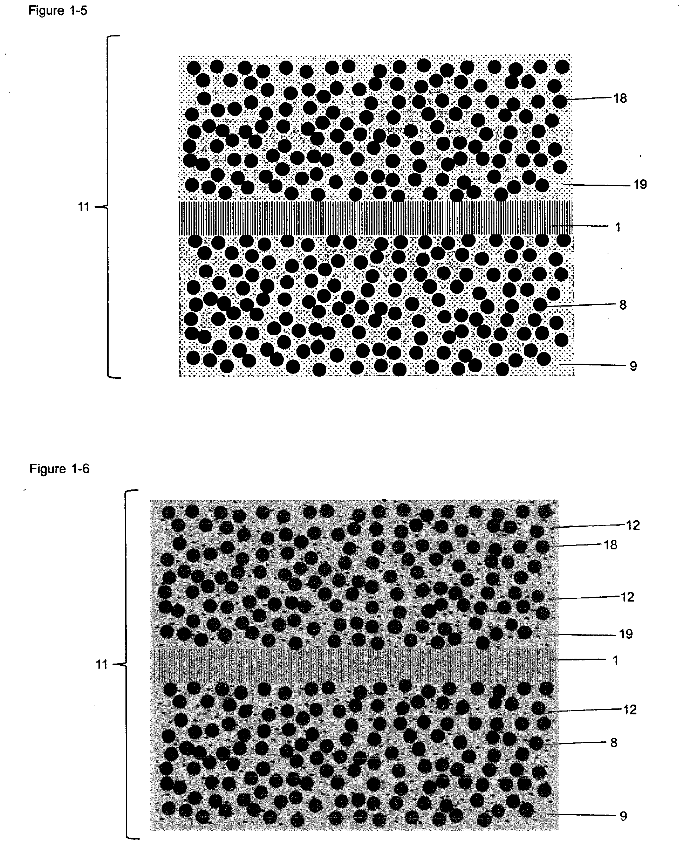

We will now describe in relation with Figures 1-1 to 1-5 to various aspects of the method according to the invention. For the sake of simplification of these figures, the fibers in the fiber plies are represented only as unidirectional parallel fibers (along one same direction for each ply), not as woven fabric.

Figure 1-1 illustrates the transfer of the VACNT onto the polymer film. Figure 1-1 a) shows the VACNT array 1 attached to their original growth substrate 2. Said growth substrate 2 is usually a metallic substrate, such as stainless steel or aluminium. A polymer film 3 (typically thermoplastic) is provided. In order to facilitate handling of the polymer film 3 which is advantageously very thin, in this example, said polymer film 3 is supported by another, temporary, polymer film 4 which will be removed at a later stage. Said polymer film 3 is put in contact with the surface of the VACNT array 1 (figure 1-1 b), by applying pressure (indicated on the figure by arrows) and possibly at a temperature above room temperature. The growth substrate 2 can then be peeled off (figure 1-1 c)), which is indicated on the figure by an arrow. This transfer isrequires specific equipment, specific experience and specific safety precautions due to possible hazard related to loose nanoparticles.

The complex 5 formed by the VACNT array layer 1 fixed on the polymer film 3, said polymer film 3 optionally supported by another, temporary, polymer film 4 (in this case the complex has the reference number 6), represents a saleable product which can be delivered to a manufacturer of composite parts. The manufacturer of the composite material does not have to handle VACNT layers deposited on their growth substrate; this resolves one of the problems that forms the starting point of the present invention. Figure 1-2 illustrates the first substantial step of the process carried out by the composite part manufacturer: the complex 5 or 6 is placed on a first fiber ply 7 (in this case a prepreg fiber ply, comprising fibers 8 impregnated with a matrix 9, which is a thermosetting, uncured polymer), so that the VACNT array 1 contacts the thermosetting polymer matrix 9. Some degree of pressure is exerted onto the surface of the complex 5 or 6 (indicated by arrows) such as to ensure intimate contact between the VACNT array 1 and the thermosetting polymer matrix 9. If the complex 6 comprises a temporary polymer film 4 this film 4 will then be peeled off, see figure 1-3.

In a further step illustrated on figure 1-4, a second fiber ply 17 is placed on the polymer film 9 of the complex 5. Some degree of pressure (represented on the figure by arrows) is exerted in order to ensure intimate contact between the second fiber ply 17 and the polymer film 3. This leads to a first intermediate product 10 comprising external composite plies 7,17 and an internal VACNT array 1.

In the example of figure 1-4 said second fiber ply 17 is a prepreg fiber ply, comprising fibers 18 impregnated with a matrix 19, which is a thermosetting polymer. Said second fiber ply 17 can be the same as the first fiber ply 7, or can be different. In particular, the fibers 18 and/or the matrix 19 can be the same as the fibers 8 and/or the matrix 9 of the first fiber ply 7, or can be different. As can be seen, the polymer film 3 form an interlayer (called here "interleave") between two prepreg plies.

In the framework of the method according to the invention, the sequence of steps illustrated on figure 1-2, figure 1-3 and figure 1-4 can be repeated once or several times, to obtain a multi-ply first intermediate product 10.

In a further step illustrated schematically on figure 1-5, the first intermediate product 10 is cured. This means that it is submitted to a heat treatment at a temperature and for period of time sufficient to cure the thermosetting polymer(s) of the matrices 9,19. This curing step lead to a second intermediate product 11. During this curing process, the polymer film 3 is dissolved in the matrix 9,10.

In the example of figure 1-5, the matrix 9,19 of the second intermediate product 11 consists of a homogeneous blend of reticulated thermoset polymer with a miscible thermoplastic polymer, the concentration of said miscible, thermoplastic polymer being below the solubility limit.

In the example of figure 1-6, the matrix 9,19 of the second intermediate product 11 consists of a heterogeneous blend of reticulated thermoset polymer with a miscible thermoplastic polymer, the concentration of said miscible, thermoplastic polymer being above the solubility limit, leading to the formation of thermoplastic polymer particles 12 within the matrix that is comprising the thermoset polymer and dissolved thermoplastic polymer.

When a post-impregnation process is used, the dry plies are impregnated with uncured thermosetting polymer after the lay-up of the layers (figures 1-4).

We will now describe advantageous embodiments of the invention, which can be executed by a person skilled in the art.

In one advantageous embodiment of the invention the selected thermoplastic polymer material is a film of Poly(caprolactone) (abridged PCL, CAS-N° 25038-54-4). This thermoplastic polymer material is semi-crystalline, it has a glass transition temperature of - 60°C and a softening-melting temperature of around 60°C to 70°C. It is thus easily processable for VACNT transfer under usual accessible temperature conditions. Upon softening it will infiltrate between the nanotubes of the VACNT network; this infiltration is driven by capillarity. Its mechanical properties are sufficiently strong for handling and processing of a film with a thickness of around 25 µm or less; the thickness can be well below 20 µm. Its solubility in several organic solvents (including acetone, chloroform, dichloromethane, dimethylformamide, ethanol, methanol, tetrahydrofuran and toluene or their mixtures (see E. Altun et al., "The effect of solvent and pressure on polycaprolactone solutions for particle and fibre formation", European Polymer Journal, Volume 173, 15 June 2022, 111300)) opens the possibility to transform it into a thin films not only by extrusion or hot lamination techniques but also by liquid solution processing such as spin coating, wet lamination and drying or spray coating and drying. Very thin PCL films can also be fabrication via a biaxial stretching technique (see K.W. Ng et al., "In vivo evaluation of an ultra-thin caprolactone films as a wound dressing", J. Biomater. Sci. Polym. Ed. 2007, 18(7), p. 825-938; this publication reports film thickness between 5 µm and 15 µm).

PCL is known to act as toughening additive when mixed with epoxy resin (see L. Orduna et. al., "Effect of the Simultaneous Addition of Polycaprolactone and Carbon Nanotubes on the Mechanical, Electrical, and Adhesive Properties of Epoxy Resins Cured with Ionic Liquids", Polymers 2023, 15, 1607). As a consequence, the dissolution of a PCL film in epoxy resins in appropriate proportions is found not to deteriorate the properties of the epoxy matrix, and can in certain cases even improve them.

PCL can form a solid solution in epoxy resin systems (see J. Parameswaranpillai et. al., "Miscibility, phase morphology, thermomechanical, viscoelastic and surface properties of poly(ε-caprolactone) modified epoxy systems: Effect of curing agents", Ind. Eng. Chem. Res. 2016, 55, 10055-10064) although the degree of solubility (or miscibility) seems to be dependent on the hardening (or curing) agent chosen to activate the polymerization. For instance, anhydrides curing agents may give rise to immiscible epoxy-PCL blends while amines generally produce miscible blends thanks to the hydrogen bonding that takes place with the ester groups of the PCL (see Clark, et. al., "Hydrogen-bonding in epoxy-resin poly(ε-caprolactone) blends", J. Appl. Polym. Sci. 1984, 29, 3381-3390).

As mentioned above, PCL films can be manufactured by different techniques. In one variant the PCL film has been manufactured by spray coating and drying of a PCL solution in acetone. In another variant the PCL film has been manufactured by wet lamination and drying of a PCL solution in acetone. Other possible processes for manufacturing the PCL film are for instance: solvent casting, ink jet printing, spin coating, dip coating, extrusion, calandering, heat pressing or biaxial stretching.

The VACNT transfer can be achieved for instance through the lamination of a 20 µm thick film of VACNT supported on a 52 µm thick stainless steel foil with a 25 µm thick film of PCL.

In other embodiments of the invention, other thermoplastic materials can be used as a thin support film for the VACNT. The following thermoplastic materials are miscible with thermosetting epoxy resins and can therefore be used for the present invention as thermoplastic thin film to support the VACNT arrays: poly(carbonate), poly(sulfone), poly(3-hydroxyvalerate), poly(etherimide), poly(methyl methacrylate), poly(ethylene oxide), poly(ethersulfone), poly(lactic acid).

The integration of VACNT in a laminated composite manufactured via resin injection techniques can also be achieved using combined prepreg and resin infusion technologies.

### Examples

### Example 1

An array of VACNT with a thickness of about 10 to about 20 µm synthetized on a 52 µm thick stainless steel foil was laminated with a 25 µm thick film of PCL; the stainless steel foil was then peeled off. Figure 2 shows a micrograph obtained by scanning electron microscopy of the surface of the VACNT array. The scale is 100 µm. Figures 3 and 4 show cross sections of the complex VACNT on the PCL film after transfer, at different magnification. The scale is, respectively, 50 µm and 20 µm. The lamination was carried out using a twin-roll laminator at a controlled temperature of about 60 °C with a pressure of 3 bars and a speed of 0.2 m/min. Peeling was carried out at room temperature.

### Examples 2 to 5

In order to demonstrate the actual dissolution of the PCL film in the epoxy resin and the efficient integration of the VACNT via their introduction in a composite part as a PCL supported interleave, four composite plates consisting of 5 plies of carbon fiber reinforced epoxy polymer stacked according the following layup [0/90/0/90/0] (except for Plate 3 ; 16 plies) have been manufactured (4 interplies in each plate) (except for Plate 3 ; 15 interplies).

The manufacturing process of these plates is typical of the resin systems used for these examples. It involves:
- The sealing in a vacuum bag of the stack of plies laid up on a stainless steel plate,
- A de-bulking step where vacuum is applied inside the bag down to an absolute pressure below 100 mbar for 60 minutes at room temperature,
- An increase of temperature and pressure via a heating press according to the following cycle:
   (i) applied vacuum 1 bar until ramp 1;(ii) Applied vacuum 0.35 bar ± 5 bar from ramp 1 until 20 °C post cooling,
   (iii) Applied force 4 kN ± 1 kN for 7.41 bar ± 1.85 bar until 20 °C,
   (iv) Ramp 1 - 3°C/min,
   (v) Plateau 1 - 110 °C for 60 minutes,
   (vi) Ramp 2 - 1°C/min
   (vii) Plateau 2 - 180 °C ± 5 °C for 120 min
   (viii) Cooldown 1°C/min.

When applicable, the VACNT supporting interleave was introduced by hand during the lay-up process with the VACNT facing the prepreg side. The polymer film on the back side of the PCL film was manually removed, too.

### Example 2

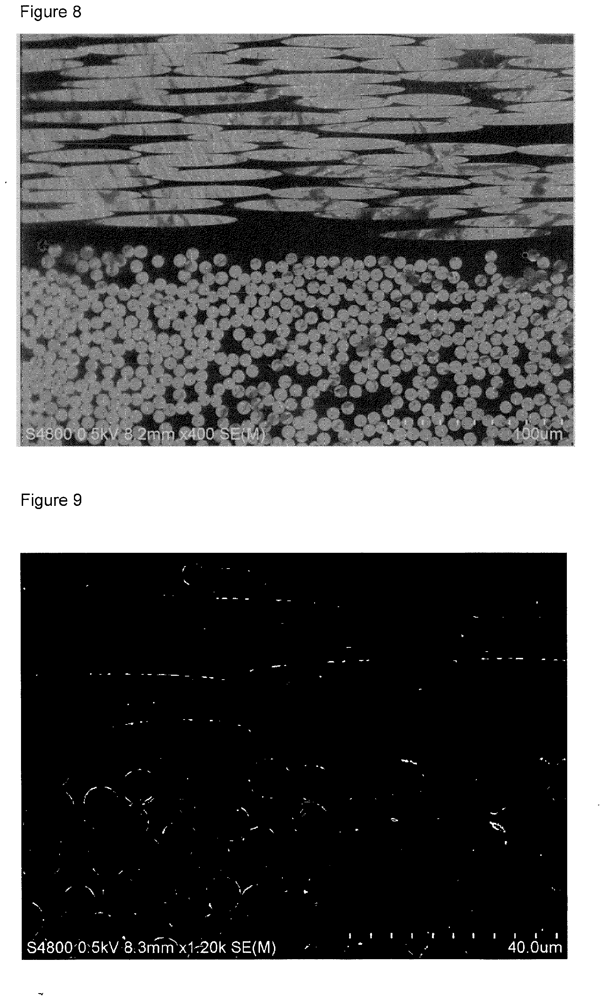

Plate 1 illustrates prior art: it is used here as a reference and contains neither PCL film nor VACNT layer. Figures 5 to 9 are images of vertical cross sections: figures 5 to 7 were obtained by optical microscopy at different magnifications, figures 8 to 9 were obtained by scanning electron microscopy at different magnifications.

Figure 5 shows five prepreg layers with substantially horizontal fibers (with respect to the length and width of the plate), three of them being oriented at 0°, separated by two prepreg layers with substantially horizontal fibers oriented at 90° (that is to say that the observer sees a cross section across the fibers oriented at 90°). The scale is 250 µm.

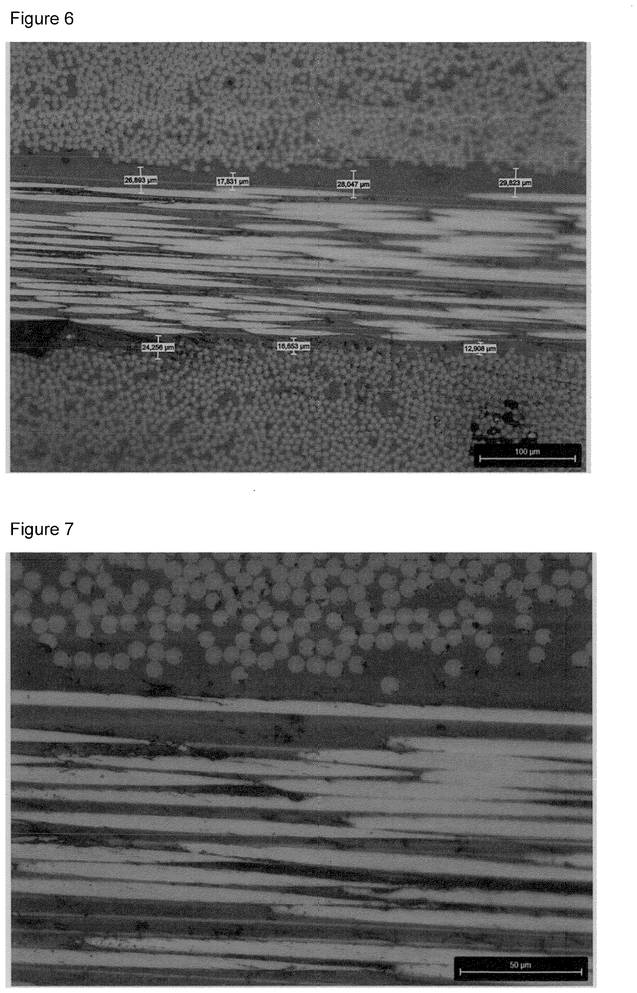

Figure 6 shows a detail of figure 1, namely a fiber layer oriented at 0° bearing on each of its faces a fiber layer oriented at 90°. The scale is 100 µm. The interply thickness (i.e. the resin thickness between the fibers of two stacked plies) as marked at several locations ranges between about 12.9 µm and about 29.8 µm.

Figure 7 shows a detail of figure 6, namely the interply zone between the fiber layer oriented at 90° (upper third of the figure) and the fiber layer oriented at 0° (lower two thirds of the figure). The scale is 50 µm.

Figure 8 shows the interply zone between the fiber layer oriented at 0° (upper half of the figure) and the fiber layer oriented at 90° (lower half of the figure). The scale is 100 µm. Figure 9 shows a detail of figure 8, the scale is 40 µm. Figure 9 shows that the thickness of the interply zone can be locally zero, which corresponds to a direct contact between a fiber oriented at 0° and a fiber oriented at 90°.

These figures show that without PCL nor VACNT the interply thickness ranges from 0 µm to about 30 µm.

### Example 3

Plate 2 illustrates a preparatory test for the invention and is used here to demonstrate the dissolution of the PCL film in the epoxy matrix. Plate 2 comprises a PCL film at each interply. This PLC film does not comprise VACNT. Its nominal thickness was 25 µm.

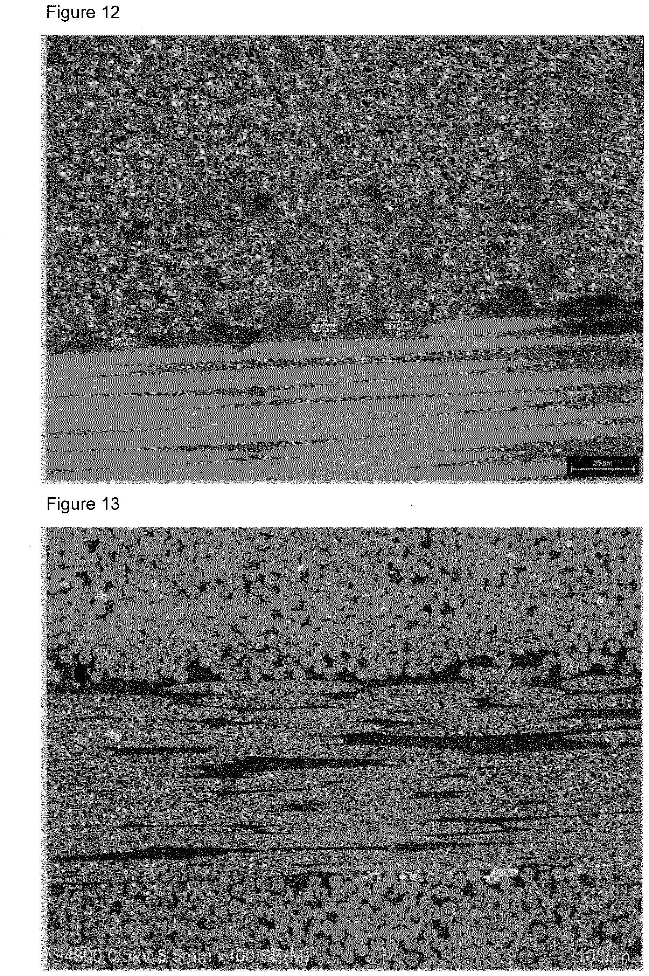

Figures 10 to 14 are images of vertical cross sections through plate 2: figures 10 to 12 were obtained by optical microscopy at different magnifications, figures 13 to 14 were obtained by scanning electron microscopy at different magnifications.

Figure 10 shows five prepreg layers with substantially horizontal fibers (with respect to the length and width of the plate), three of them being oriented at 90°, separated by two prepreg layers with substantially horizontal fibers oriented at 0°. The scale is 250 µm.

Figure 11 shows a detail of figure 10, namely a fiber layer oriented at 0° bearing on each of its faces a fiber layer oriented at 90°. The scale is 100 µm. The interply thickness as marked at several locations ranges between about 14.9 µm and about 23.1 µm.

Figure 12 shows a detail of figure 1, namely the interply zone between the fiber layer oriented at 90° (upper two thirds of the figure) and the fiber layer oriented at 0° (lower third of the figure). The scale is 25 µm. The thickness of the interply zone as marked at three locations varies between about 3.0 µm and about 7.8 µm.

Figures 13 and 14 are further scanning electron mircoscopy images of the interply zone at two different magnifications (the scale is 100 µm in Figure 13, and 40 µm in Figure 14). As can be seen from Figure 14, the thickness of this zone can be locally zero (physical contact between fibers of adjacent plies).

These figures show that with a PCL films (without a VACNT layer deposited onto the PCL film) the interply thickness ranges from 0 to about 25 µm. The addition of the PCL film (originally 25 µm thick before dissolution in the epoxy matrix) did not increase the interply thickness. Furthermore, the fil is no longer visible after lamination: it completely dissolved into the epoxy matrix during the lamination (consolidation) process through the combined effects of temperature and compression.

It seems that the interply thickness is even lower with the PCL interleave; it could be possible that the viscosity at the consolidation temperature of the PCL - epoxy resin blend is lower than that of the pure epoxy resin, thus favoring the intermixing of the matrix from adjacent plies.

### Example 4

Plate 3 illustrates prior art and is used here as another reference. It contains VACNT at each interply, but no PCL film, the VACNT being introduced by a direct transfer from their growth substrate onto the prepreg plies. For convenience, the layup of this plate is different from the other plates, but this difference does not change the conclusions we can draw. Plate 3 consists of 1- plies with the following layup: 0 / 45 / 90 / 135/ 135 / 90 / 45 / 0 / 0 / 45 / 90 / 135 / 135 / 90 / 45 / 0.

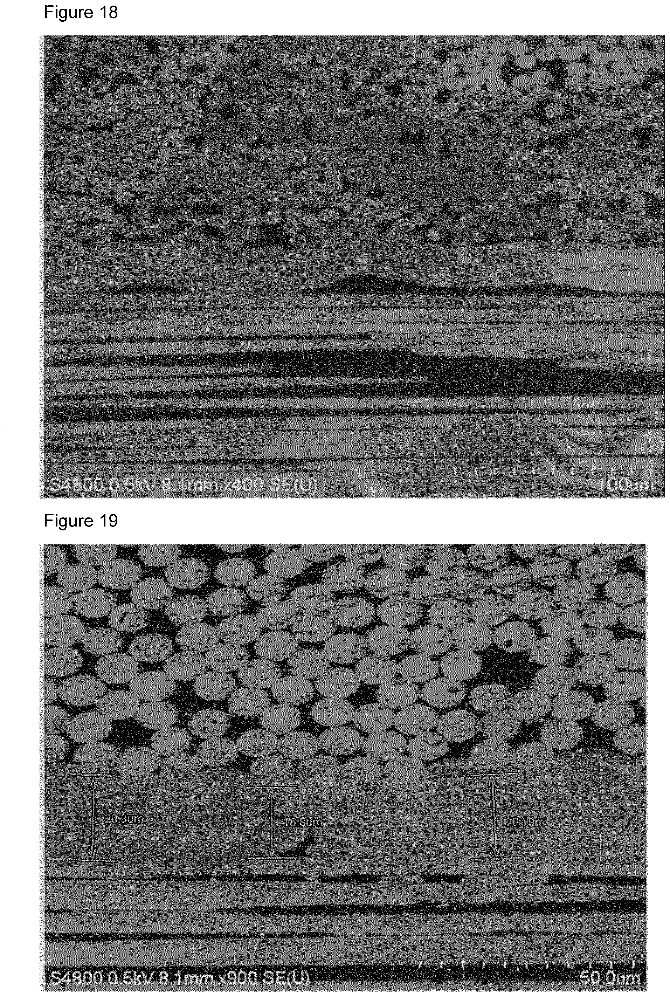

Figures 15 to 24 are images of vertical cross sections through plate 3: figures 15 to 17 were obtained by optical microscopy at different magnifications, figures 18 to 24 were obtained by scanning electron microscopy at different magnifications.

These figures show that the thickness of the VACNT layer ranges from about 13 µm to about 30 µm. The VACNT layer fully occupy the interply zone, bridging the the fibers of adcents plies. There is no pure resin layer in the interply zone. The presence of the VACNT layer does not increase the thickness of the interply zone compared to the reference plate without VACNT (plate 1).

### Example 5

Plate 4 illustrates an advantageous embodiment of the invention and demonstrates the efficiency of the invention to replicate the micro-morphology of plate 3 in the interply region by introducing the VACNT via the PCL supported interleave method.

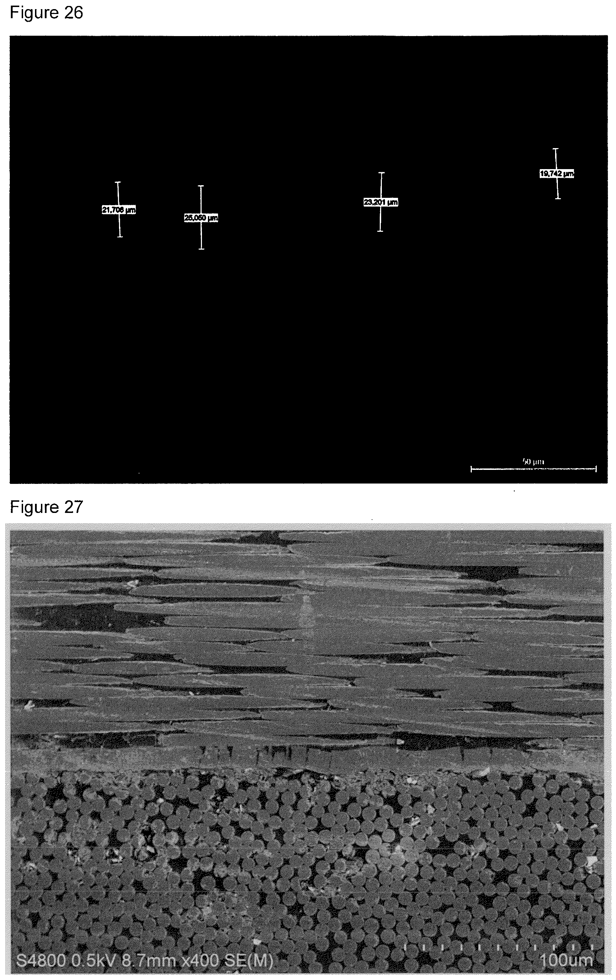

Figures 25 to 30 are images of vertical cross sections through plate 4: figures 25 to 26 were obtained by optical microscopy at different magnifications, figures 27 to 30 were obtained by scanning electron microscopy at different magnifications.

### Comments to Examples 2 to 5

These figures show that the interply thickness ranges from about 8 µm to about 25 µm. The addition of the PCL film does not increase the thickness of the interply zone compared to the reference with VACNT and without PCL (plate 3). Like in plate 3, the VACNT layer fully occupies the interply zone, bridging the fibers of adjacent plies. There is no pure resin layer in the interply region. The layer consisting of the VACNT supported by the PCL film does not increase the thickness of the interply zone compared to the reference without VACNT (plate 1). The PCL layer is no longer visible on highly magnified scanning electron microscopy images, suggesting that it has completely dissolved into the epoxy matrix during the consolidation process under the combined influence of temperature above the melting point of the thermoplastic PCL film and pressure.

The defective aspect of some fibers in plate 4 is likely to result from an unintentional excessive pressure applied during the consolidation process of plate 4 and should not be taken under consideration for interpreting the results.

## Claims

1. Method for manufacturing a composite article comprising a plurality of plies, wherein a ply comprising an array of vertically aligned carbon nanotubes, abridged VACNT, deposited onto a polymer film is deposited onto a ply of fibers which are possibly preimpregnated with a thermosetting resin.

2. Method for manufacturing a composite article comprising a plurality of plies according to claim 1, said method comprising:
providing at least a first ply of a first type, called here "first composite ply", having a first surface and a second surface, said first composite ply including a first plurality of fibers disposed therein, and said first composite ply possibly being infiltrated with a thermosetting polymer,
providing at least a ply of a second type, called here "VACNT ply", comprising an array of vertically aligned carbon nanotubes, abridged VACNT, deposited onto a polymer film, said VACNT ply having a first surface formed by said VACNT array, and a second surface formed by said polymer film,
providing at least a second ply of a first type, called here "second composite ply", having a first surface and a second surface, said second composite ply including a second plurality of fibers disposed therein, and said second composite ply possibly being infiltrated with a thermosetting polymer, and said second composite ply being identical to or different from said first composite ply,
contacting said first surface of said first composite ply with said first or second surface of said VACNT ply,
contacting said first surface of said second composite ply with said second or first surface of said VACNT ply, to form a stack of plies,
possibly repeating, once or more, the stacking of alternate composite plies including fibers disposed therein and VACNT plies comprising a VACNT array deposited onto a polymer film,
optionally infiltrating said stack of plies with a fluid thermosetting resin,
exerting pressure onto said composite article such that said composite plies and said VACNT plies are joined together to form a composite article.

3. Method according to claim 1 or 2, wherein said polymer film is a thermoplastic polymer film.

4. Method according to any of claims 1 to 3, wherein said step of exerting pressure is carried out at elevated temperature.

5. Method according to any of claims 3 to 4, wherein said step of exerting pressure is carried out at a temperature corresponding to at least the melting temperature of said thermoplastic polymer.

6. Method according to any of claim 3 to 5, wherein said thermoplastic polymer and said thermosetting polymer are selected such that they are miscible.

7. Method according to any of claims 1 to 6, wherein said thermosetting polymer is an epoxy-based polymer.

8. Method according to any of claims 1 to 6, wherein said polymer film is selected from the group consisting of: poly(caprolactone), poly(carbonate), poly(sulfone), poly(3-hydroxyvalerate), poly(etherimide), poly(methyl methacrylate), poly(ethylene oxide), pol(yethersulfone), poly(lactic acid), poly(ethylene-co-methacrylic acid), poly(ethylene-co-methyl acrylate), poly(ethylene-co-glycidyl methacrylate).

9. Method according to any of claims 1 to 8, wherein said thermosetting polymer film has a thickness of less that 40 µm, preferably less than 30 µm, still more preferably less than 25 µm, still more preferably less than 20 µm, and most preferably less than 15 µm.

10. Method according to any of claims 1 to 9, wherein said thermosetting polymer is cured at a temperature above the melting temperature of said thermoplastic polymer.

11. Composite part capable of being obtained by the method according to any of claims 1 to 10.

12. Use of aply comprising an array of vertically aligned carbon nanotubes deposited onto a polymer film, which is preferably a thermoplastic film, said ply being called here "VACNT ply", for the manufacture of a composite part comprising a fiber ply of a first type in contact with each face of said VACNT ply, said fiber plies of a first type being impregnated with a thermosetting resin.
